# EUROPÄISCHE PATENTANMELDUNG

(11) **EP 1 455 214 A1**
(43) Veröffentlichungstag der Anmeldung: **08.09.2004**
(21) Anmeldenummer: 04100865.7
(22) Anmeldetag: 04.03.2004
(51) Int. Cl.: G02B 21/00, G02B 21/06, G02B 5/18, A61B 3/13

(54) **Operationsmikroskop mit einer Objektfeldbeleuchtung**

(30) Priorität: 07.03.2003 DE 10309971
(71) Anmelder: Leica Microsystems (Schweiz) AG, 9435 Heerbrugg (CH)
(72) Erfinder: Sander, Ulrich Dr., 9445 Rebstein (CH)
(74) Vertreter: Reichert, Werner F., Dr.

(57) **Zusammenfassung**

Die Erfindung betrifft ein Operationsmikroskop (2, 3, 5) mit einer neuartigen Laserbeleuchtung (11 ) und in einer bevorzugten Ausgestaltung in einer Anordnung, bei welcher ein diffraktives Element (7) einen zusätzlichen Beleuchtungsstrahl und einen Messstrahl erzeugt.

## Beschreibung

Die Erfindung betrifft ein Operationsmikroskop mit einer Objektfeldbeleuchtung.

Unter Operationsmikroskop im Sinne der Erfindung ist ein Operationsmikroskop zur vergrößerten visuellen Darstellung eines Objektfeldes für einen Beobachter durch ein Okular zu verstehen.

Zur Beleuchtung des Objektfelds bei Operationsmikroskopen werden die unterschiedlichsten Lichtquellen eingesetzt, z. B. Halogenlampen, Glühlampen, Entladungslampen. Der Einsatz von Laserdioden für Analyse, Diagnose und Therapie (z.B. Netzhaut-Behandlungen) ist derzeit üblich. Ebenso sind Laser für Steuerungs- und Messzwecke an Operationsmikroskopen bekannt, z. B. zur automatischen Fokussierung.

Für Beleuchtungszwecke im Sinne einer Lichtquelle für Objektfeldbeleuchtung bei Operationsmikroskopen sind Laser jedoch unbekannt. Daraus entsteht der Nachteil, dass neben einem Laser für besagte Analyse- und Diagnosezwecke zusätzlich auch eine herkömmliche Beleuchtung erforderlich ist.

Daraus ergibt sich eine erste Teilaufgabe, die der Erfindung zugrunde liegt.

Die Lösung dieser Teilaufgabe liegt in der Zur-Verfügung-Stellung eines Lasers mit geeigneter Lichtleistung als Lichtquelle für eine Objektfeldbeleuchtung.

Um entsprechende Beleuchtungsstärken im Objektfeld zu erreichen, müssen somit Laser mit einer relativ hohen Leistung zum Einsatz kommen. Bei ähnlich starken Hochleistungslampen und Entladungslampen ist es bekannt, dass die Regelung der Beleuchtungsstärke einerseits zu Problemen bei der Wärmeabfuhr führt, wenn Absorptionsfilter verwendet werden, andererseits bildet sich bei Lochblenden, die temperaturstabiler sind, deren Lochstruktur im Leuchtfeld ab. Dem gegenüber sind Laser vorteilhaft, weil ihre eigentliche Lichtquelle relativ weit vom Operationsmikroskop entfernt sein kann und die Wärmeentwicklung der Lichtquelle somit ebenso entfernt ist. Sollte der Laserstrahl im Bereich des Operationsmikroskops jedoch abgeschwächt werden, treten herkömmlich vergleichbare Probleme auf, wie bei Hochleistungslampen und Entladungslampen.

Zur Vermeidung dieser Nachteile bei gleichzeitiger Ausstattung eines Operationsmikroskops mit einer leistungsfähigen, regelbaren Beleuchtung stellte sich somit die zweite Teilaufgabe, eine Laserbeleuchtung zu finden, welche den spezifischen Betriebsanforderungen eines Operationsmikroskops gerecht wird.

Der Erfinder erkannte, dass die Verwendung und die erfindungsgemäße Integration eines Hochleistungslasers in Kombination mit einem sogenannten diffraktiven Strahlabschwächer in ein Operationsmikroskop eine gute Lösung der gestellten zweiten Teilaufgabe bietet. Solche diffraktiven Strahlabschwächer sind bisher nicht für Beleuchtungszwecke eingesetzt worden. Erfindungsgemäß können monochromatische oder Weißlicht- Laser eingesetzt werden.

Durch einen regelbaren diffraktiven Strahlabschwächer ist die Lichtintensität im Beleuchtungsstrahl (0. Ordnung) auch ohne Wärmeabfuhr-Probleme im Beleuchtungsstrahl selbst regelbar. Dies deshalb, da gebeugte und damit aus dem Beleuchtungsstrahl energetisch abgezogene Lichtmengen in Absorbern vernichtet werden können, die an geeignete Orte gelegt werden können, an denen eine etwaige Wärmebildung nicht stört.

Diffraktive Strahlabschwächer für Hochleistungslaser - wie z.B. jener der Fa. TOPAG Lasertechnik GmbH, Darmstadt, vgl. die TOPAG-Informationsschrift: "Diffractive Variable Attenuators for High Power Lasers", 2 Seiten, Publikationsdatum unbekannt, auch veröffentlicht in "Physik Journal" 1 (2002) Nr. 10, Seite 61, gelangten bisher in folgenden Gebieten zum Einsatz: Materialbehandlung oder -bearbeitung (z.B. Kennzeichnung oder Oberflächenabtastung), Laseranwendungen, Fotometrie, optische Forschung und bei holografischen Anwendungen, nicht jedoch zur Beleuchtungsregelung einer Objektfeldbeleuchtung bei einem Operationsmikroskop.

Der Erfinder erkannte insbesondere, dass ungeachtet dieser spezifischen Laseranwendungen im Falle der Verwendung eines Lasers die Strahlabschwächung und insbesondere deren Regelbarkeit mittels eines diffraktiven optischen Elements optimal für die Beleuchtung eines Operationsmikroskops zum Einsatz gelangen kann.

Die prinzipielle Funktionsweise eines oben genannten diffraktiven Strahlabschwächers ist, dass durch Beugung eines Eingangsstrahls Iᵢₙₚᵤₜ (Strahl aus der Laserlichtquelle) die maximale Intensität des Eingangsstrahls Iᵢₙₚᵤₜ auf einen verbleibenden Reststrahl Iₒᵤₜₚᵤₜ und in die ±1. Ordnung oder höhere Ordnungen gebeugte Strahlen aufgeteilt wird. Beugungen ±2. und ±3. und höherer Ordnungen sind nicht bevorzugt. Die gebeugten Strahlen werden in einem der Ausführungsbeispiele in einem Absorber vernichtet, der Ausgangsstrahl Iₒᵤₜₚᵤₜ bildet sich aus dem entsprechend abgeschwächten Eingangsstrahl Iᵢₙₚᵤₜ. Somit steht je nach Auswahl der diffraktiven Struktur ein geregelter Reststrahl Iₒᵤₜₚᵤₜ zur Verfügung. Die Intensität dieses Strahls kann von lₘₐₓ = Iᵢₙₚᵤₜ (im Falle keiner Beugung) bis zu Iₘᵢₙ^{~} 0 geregelt werden. Bei Verwendung entsprechender diffraktiver Strukturen ist diese Regelung stufenlos möglich. Unter www.topag.de ist auf die Ausführungsform der diffraktiven Elemente Bezug genommen. Dem Fachmann für Lasertechnik sind jedoch auch andere Verfahren zur diffraktiven Strahlabschwächung bekannt, die ebenso im Rahmen der Erfindung einsetzbar sind (z.B. Blaze-Gitter).

Somit steht durch die erfindungsgemäße Integration eines Lasers eines diffraktiven Bauelements in ein Operationsmikroskop eine hochleistungsfähige, regelbare Beleuchtung zur Verfügung.

Der Erfinder erkannte jedoch darüber hi naus, dass die gebeugten Strahlen ±1. oder höherer Ordnung nicht zwingend vernichtet werden müssen, sondern als zusätzliche Beleuchtung in Betracht kommen können. Eine bevorzugte Ausgestaltung der Erfindung sieht somit eine optional zuschaltbare direkte, seitliche Objektbeleuchtung mit einem Beleuchtungsstrahl 1. Ordnung vor.

Eine weitere bevorzugte Ausgestaltung der Erfindung misst einen der gebeugten Strahlen der ±1. oder höherer Ordnung mittels eines Sensors und gibt somit einen direkten Rückschluss auf die Intensität des (Haupt-) Beleuchtungsstrahls 0. Ordnung. Es ist gegebenenfalls vorgesehen, dass diese Messinformation auf einem Display angezeigt wird, das gegebenenfalls dem durch die Okulare schauenden Beobachter ins Blickfeld auf seinen Wunsch an einer günstigen Stelle im Operationsmikroskop eingespiegelt werden kann.

Weitere Ausbildungen der Erfindung sind in den Figuren und in den abhängigen Patentansprüchen angegeben.

Die Bezugszeichenliste ist Bestandteil der Offenbarung.

Anhand der schematischen Figuren wird die Erfindung symbolisch und beispielhaft näher erläutert.

Die Figuren werden zusammenhängend und übergreifend beschrieben. Gleiche Bezugszeichen bedeuten gleiche Bauteile; Bezugszeichen mit unterschiedlichen Indices geben funktionsgleiche oder ähnliche Bauteile an.

Es zeigen dabei
- Fig. 1 -: einen Aufbau eines Operationsmikroskops mit einer Laserlichtquelle als Beleuchtung;
- Fig. 2 -: den Aufbau nach Fig. 1, in den ein diffraktiver Strahlenteiler integriert ist und bei dem beide (alle) gebeugten Strahlen vernichtet werden;
- Fig. 3 -: den Aufbau gemäß Fig. 2, bei dem eine symmetrische Hälfte der gebeugten Strahlen vernichtet und die andere für eine zusätzliche, direkte Objektbeleuchtung sorgt;
- Fig. 4 -: den Aufbau gemäß Fig. 2, bei dem eine symmetrische Hälfte der gebeugten Strahlen vernichtet und die andere zur Steuerung und Einspiegelung einer Bildinformation in das Operationsmikroskop vorgesehen ist und
- Fig. 5 -: einen kombinierten Aufbau gemäß den Figuren 3 und 4.

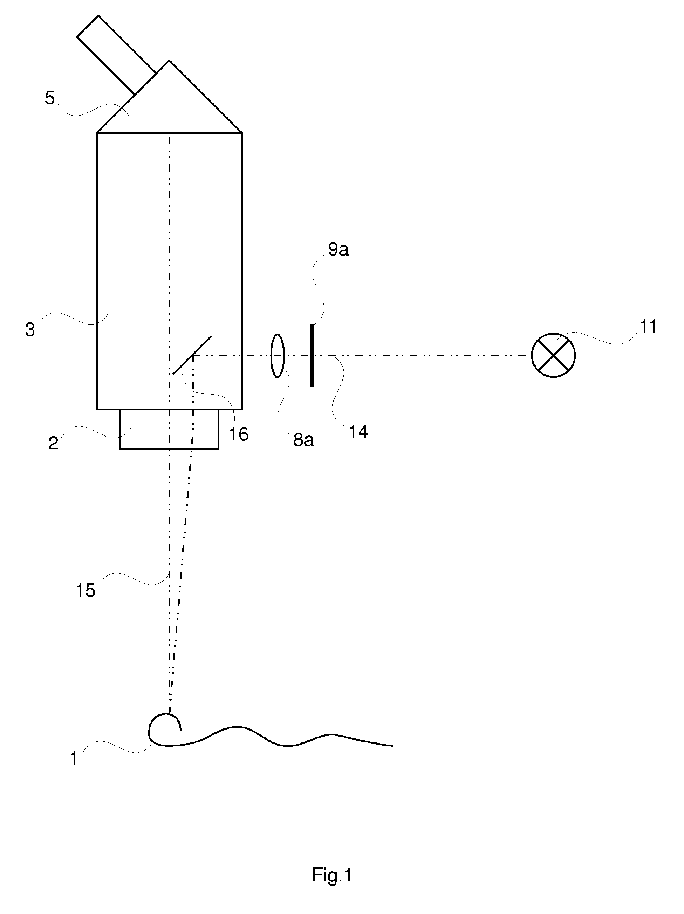

Fig. 1 zeigt den Aufbau eines Operationsmikroskops 3 mit einem Tubus 5 mit Okularen. Die Achse 15 eines Hauptobjektivs 2 ist gleichzeitig als Hauptachse des Operationsmikroskops 3 dargestellt. Der aus einer seitlich angeordneten Laserlichtquelle 11 stammende Beleuchtungsstrahl 14 kann mittels eines fakultativ angeordneten Shutters 9a gepulst oder geschlossen werden. Der Shutter ist zwar in der Nähe des Operationsmikroskops 3 gezeichnet, er könnte jedoch auch entfernt von diesem angeordnet sein, um gegebenenfalls Wärmeprobleme vom Operationsmikroskop 3 fern zu hatten.

Eine mittels eines Linsensymbols stellvertretend dargestellte Beleuchtungsoptik 8a beeinflusst die Beleuchtungsstrahl-Geometrie.

Dieses Element kann aus einer den gebündelten Laserstrahl 14 aufweitenden Optik oder aus einer Pinhole-Anordnung bestehen und bildet nach Umlenkung durch das Umlenkelement 16 das Beleuchtungslicht auf das Objektfeld 1 ab.

Anstelle der Beleuchtungsoptik 8a könnte auch eine Scaneinrichtung vorgesehen sein, die den Laserstrahl über das Objektfeld 1 scannt und derart ohne Abbildungsoptik eine vollflächige Beleuchtung erzeugt.

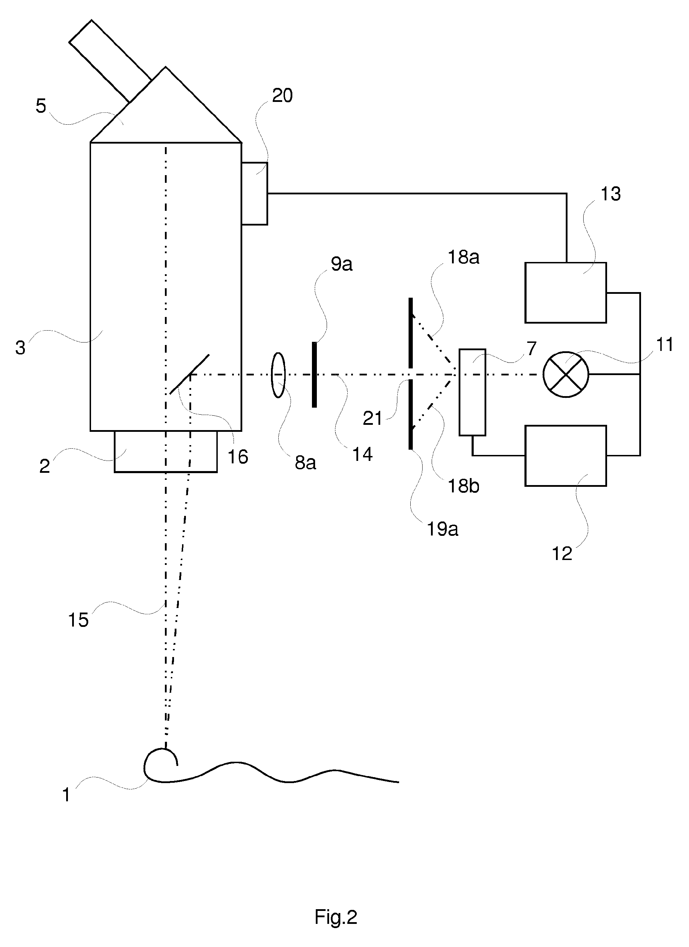

In Fig. 2 ist der Aufbau gemäß Fig. 1 durch die Integration eines diffraktiven Elements 7 in den Beleuchtungsstrahl 14 ergänzt. Hierbei ist ein Beleuchtungsstrahl 14 durch eine Öffnung 21 des Absorbers 19a hindurch wie bei Fig. 1 für eine Objektfeldbeleuchtung durch das Hauptobjektiv 2 vorgesehen. Die gebeugten Strahlen ±1. oder höherer Ordnung - symbolisch dargestellt durch die Achsen 18a und 18b-werden in dem Absorber 19a absorbiert. Mittels einer am Operationsmikroskop 3 angeordneten manuellen oder elektronischen Steuerung 20 kann über eine elektronische Datenverarbeitung 13 Einfluss auf die Abgabeleistung der Laserlichtquelle 11 genommen werden oder/und über eine Ansteuerung 12 das diffraktive Element 7 zur Lichtschwächung geregelt werden. Verbindungsleitungen sind mit 22a-c gekennzeichnet.

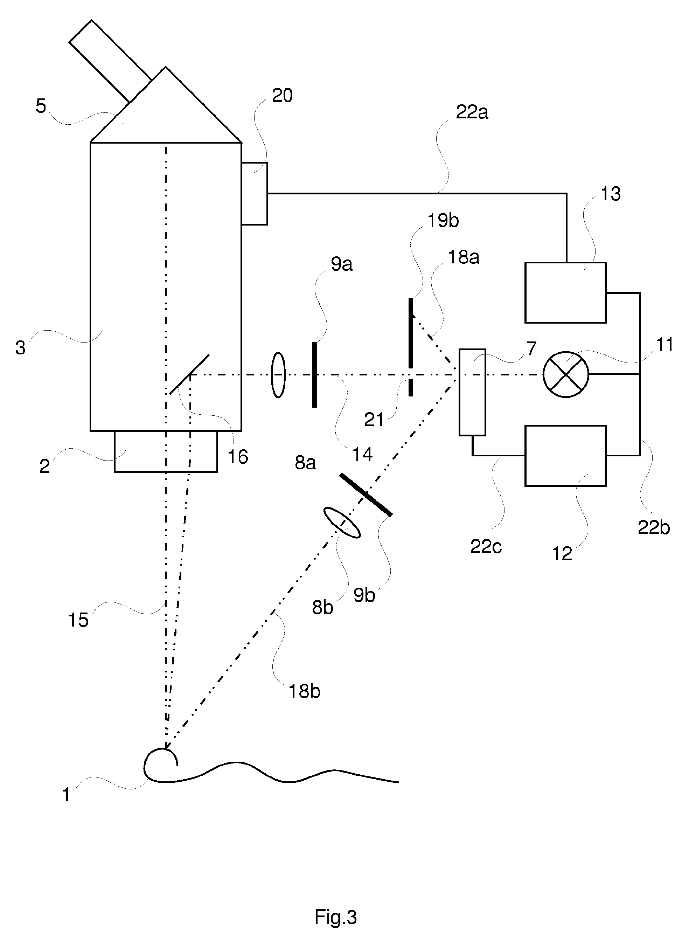

Fig. 3 zeigt die gleiche Anordnung wie in Fig. 2, nur ist bei dieser erfindungsgemäßen Weiterbildung ein Teil der gebeugten Strahlen 1. oder höherer Ordnung (plus oder minus - beispielsweise mit der Achse 18b dargestellt) für eine direkte zusätzliche Objektbeleuchtung vorgesehen. Analog dem (Haupt)-Beleuchtungsstrahl 14 ist auch dieser Beleuchtungsstrahl 1. Ordnung 18b optional mit einem Shutter 9b und einer abbildenden Beleuchtungsoptik 8b oder einer Scaneinrichtung ausgestattet.

Mit dieser Anordnung lässt sich eine Mehrstrahl-Beleuchtung realisieren, indem der Strahl der ±1. oder höherer Ordnung mit der Achse 18b nicht durch den Absorber vernichtet wird. Damit kann man das zu beleuchtende Objekt 1 gleichzeitig und wahlweise unter verschiedenen Winkeln unter Ausnutzung der absorbierenden Shutter 9a und 9b beleuchten.

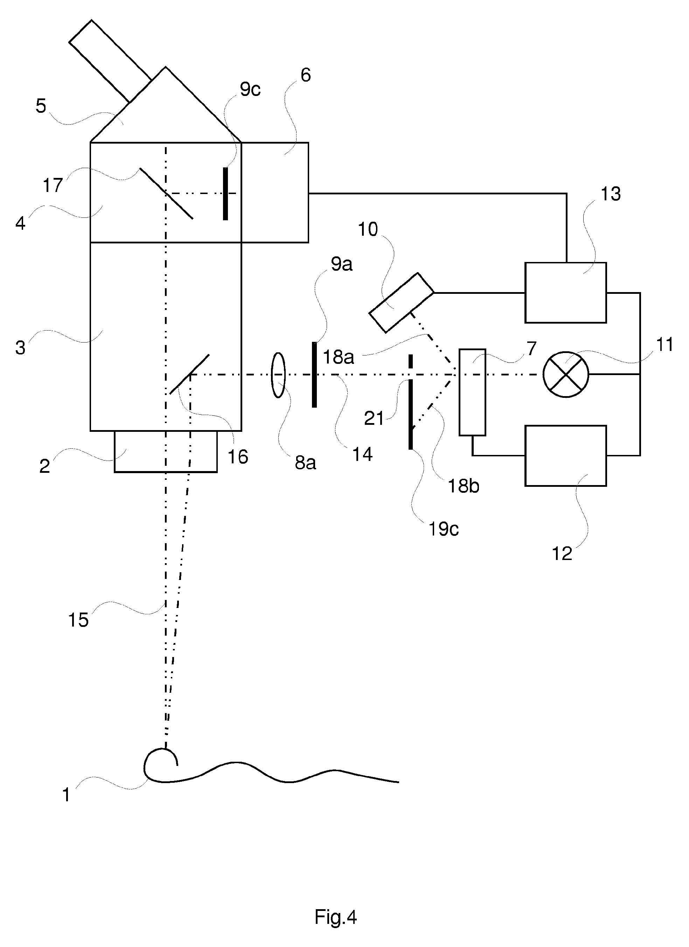

In Fig. 4 ist ein weiterer erfinderischer Aspekt dargestellt. Strahlen der ±1. Ordnung 18a oder 18b können auch als Informationsträger verwendet werden. Sie sind ein Maß für die Abschwächung des Eingangstrahls I_{input.} Wird der Strahl ±1. Ordnung einem Sensor 10 zugeführt, kann die tatsächlich vorliegende Abschwächung gemessen werden und über eine elektronische Verarbeitung 13 auf einem Display 6 angezeigt oder aber auch in das Operationsmikroskop 3 mit Hilfe des Umlenkelements 17 in einer Informationseinspiegelungsvorrichtung 4 eingespiegelt werden.

Die Anzeige kann durch einen Shutter 9c oder eine elektronische Ausschaltung oder durch Ausschwenken des Umlenkelements 17 abgeschaltet werden.

Des Weiteren ist in Fig. 4 eine Ausgestaltungsvariante der Erfindung dargestellt, welche auf die in Fig. 3 vorgestellte direkte zusätzliche Beleuchtung verzichtet. Dieses ist dadurch realisiert, dass der Absorber 19c so ausgestaltet ist, dass er den Strahl 1. Ordnung mit der Achse 18b absorbiert.

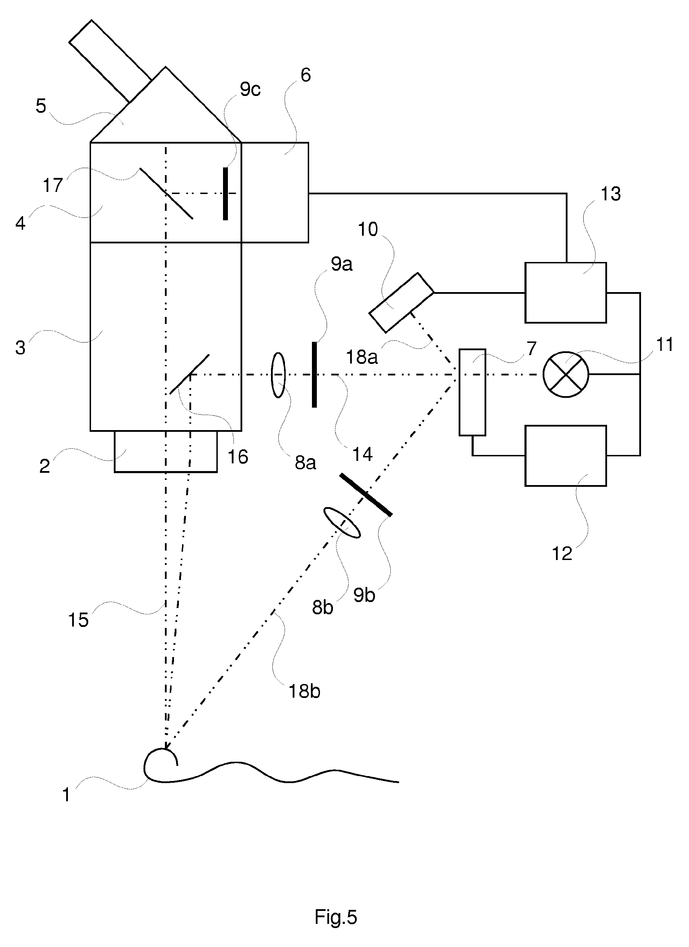

Fig. 5 zeigt eine bevorzugte Ausgestaltung der Erfindung, bei welcher die Ausführungsformen aus Fig. 3 und Fig. 4 miteinander kombiniert sind.

### Bezugszeichenliste

- 1 -: Objekt bzw. Objektfeld
- 2 -: Hauptobjektiv
- 3 -: Operationsmikroskop-Körper, Operationsmikroskop
- 4 -: Informationseinspiegelungsvorrichtung
- 5 -: Tubus mit Okularen
- 6 -: Display
- 7 -: diffraktives Element
- 8a, b -: Beleuchtungsoptik
- 9a, b, c -: Shutter
- 10 -: Sensor
- 11 -: Laserlichtquelle
- 12 -: Ansteuerung von (7)
- 13 -: elektronische Datenverarbeitung
- 14 -: Achse von (2)
- 15 -: Achse von (2)
- 16 -: Umlenkelement für Beleuchtung 0. Ordnung durch (2)
- 17 -: Umlenkelement für Dateneinspiegelung
- 18a, b -: Achse der Beleuchtung ±1. Ordnung
- 19a, b, c -: Absorber
- 20 -: Steuerung
- 21 -: Öffnung
- 22 a, b, c -: Verbindungsleitungen

## Patentansprüche

1. Operationsmikroskop (3) mit einer Lichtquelle für eine Objektfeldbeleuchtung, **dadurch gekennzeichnet, dass** als Lichtquelle eine Laserlichtquelle (11) vorgesehen ist.

2. Operationsmikroskop nach Anspruch 1, **dadurch gekennzeichnet, dass** der Laserlichtquelle (11) eine Beleuchtungsoptik (8a, 8b) für Strahlaufweitung und Strahlabbildung nachgeordnet ist.

3. Operationsmikroskop nach Anspruch 1, **dadurch gekennzeichnet, dass** der Laserlichtquelle (11) eine Scaneinrichtung für das scannende Ablenken des Laserstrahls über das Objektfeld (1) nachgeordnet ist.

4. Operationsmikroskop nach einem der vorhergehenden Ansprüche, **dadurch gekennzeichnet, dass** der Laserlichtquelle (11) ein diffraktives Element (7) für das Aufspalten des Laserstrahls in einen Beleuchtungsstrahl 0. Ordnung (14) und wenigstens einen Beleuchtungsstrahl 1. oder höherer Ordnung (18) aufweist.

5. Operationsmikroskop nach Anspruch 4, **dadurch gekennzeichnet, dass** dem diffraktiven Element (7) wenigstens ein Absorber (19) für die Strahlen 1. oder höherer Ordnung (18) nachgeordnet sind.

6. Operationsmikroskop nach Anspruch 4, **dadurch gekennzeichnet, dass** dem diffraktiven Element (7) die Beleuchtungsoptik (8a) für den Beleuchtungsstrahl 0. Ordnung (14) und eine zweite Beleuchtungsoptik (8b) für den Beleuchtungsstrahl 1. Ordnung (18b) nachgeordnet sind.

7. Operationsmikroskop nach Anspruch 6, **dadurch gekennzeichnet, dass** die Beleuchtungsoptik (8a) auf ein Umlenkelement (16) innerhalb des Operationsmikroskop-Körpers (3) gerichtet ist, welches den Beleuchtungsstrahl 0. Ordnung durch ein Hauptobjektiv (2) auf das Objektfeld (1) lenkt.

8. Operationsmikroskop nach Anspruch 6 oder 7, **dadurch gekennzeichnet, dass** die zweite Beleuchtungsoptik (8b) seitlich des Operationsmikroskop-Körpers (3) angeordnet ist und den Beleuchtungsstrahl 1. Ordnung (18b) schräg auf das Objektfeld (1) abbildet.

9. Operationsmikroskop nach einem der vorhergehenden Ansprüche, **dadurch gekennzeichnet, dass** der Laserlichtquelle (11) ein Shutter (9) für das gepulste Abdunkeln des Beleuchtungsstrahls 0. oder höherer Ordnung (14, 18a, 18b) nachgeordnet ist.

10. Operationsmikroskop nach einem der vorhergehenden Ansprüche, **dadurch gekennzeichnet, dass** einem Beleuchtungsstrahl 1. oder höherer Ordnung (18b) ein Sensor (10) für die Messung der Beleuchtungsstrahlstärke zugeordnet ist.

11. Operationsmikroskop nach Anspruch 10, **dadurch gekennzeichnet, dass** der Sensor (10) mit einer elektronischen Datenverarbeitung (13) verbunden ist, die die Laserlichtquelle (11) ansteuert und/oder mit einer Anzeigeeinrichtung bzw. einem Display (6) verbunden ist für die Darstellung der Beleuchtungsstrahlstärke.

12. Operationsmikroskop nach Anspruch 11, **dadurch gekennzeichnet, dass** das Bild des Displays (6) über ein Umlenkelement (17) in den Beobachtungsstrahle ngang des Operationsmikroskops (3) einspiegelbar ist.

13. Operationsmikroskop nach einem der vorhergehenden Ansprüche, **dadurch gekennzeichnet, dass** das diffraktive Element (7) regelbar ist für die beliebige Aufteilung des Laserstrahls in verschieden starke Beleuchtungsstrahlen 0. Ordnung (14).

14. Operationsmikroskop nach Anspruch 13, **dadurch gekennzeichnet, dass** das diffraktive Element (7) mit einer elektronischen Ansteuerung (12) verbunden ist, die vorzugsweise durch die elektronische Datenverarbeitung (13) ansteuerbar ist.

15. Operationsmikroskop nach Anspruch 13 oder 14, **dadurch gekennzeichnet, dass** als diffraktives Element (7) oder kombiniertes diffraktives Element mit Ansteuerung (7, 12) ein diffraktiver variabler Strahlabschwächer eingesetzt ist.

16. Operationsmikroskop nach einem der vorhergehenden Ansprüche, **dadurch gekennzeichnet, dass** die Beleuchtungsoptik (8) lediglich auf die Lichtwelle nlänge der Laserlichtquelle (11 ) korrigiert ist.

17. Verwendung einer Laserlichtquelle (11) zur Beleuchtung eines Objektfeldes (1) eines Operationsmikroskops (3).

18. Verwendung eines diffraktiven Laserstrahlabschwächers und einer damit verbundenen Laserlichtquelle (11) zur geregelten Beleuchtung eines Objektfeldes (1) eines Operationsmikroskops (3).
